# EUROPEAN PATENT APPLICATION

(11) **EP 4 848 405 A1**
(43) Date of publication of application: **02.12.2026**
(21) Application number: 26160326.0
(22) Date of filing: 24.02.2026
(51) Int. Cl.: H01M 10/42, H01M 10/44, H01M 10/48, H01M 10/615, H01M 10/633, H01M 10/657

(54) **BATTERY SYSTEM**

(30) Priority: 27.05.2025 JP 2025087787
(71) Applicant: Toyota Jidosha Kabushiki Kaisha, Toyota-shi, Aichi-ken 471-8571 (JP)
(72) Inventor: KATSUMOTO, Taichi, Toyota-shi, Aichi-ken, 471-8571 (JP)
(74) Representative: Winter, Brandl - Partnerschaft mbB

(57) **Abstract**

The ECU executes processing including: acquiring history information of a battery; acquiring a degradation amount of a cathode and a degradation amount of an anode; setting a threshold A; when it is determined that the degradation amount of the anode is greater than or equal to the threshold A, supplying ripple current and operating a heating device; and when it is determined that an end condition is satisfied, stopping supply of the ripple current and stopping operation of the heating device.

## Description

### BACKGROUND OF THE INVENTION

### 1. Field of the Invention

The present disclosure relates to battery systems.

### 2. Description of Related Art

Japanese Unexamined Patent Application Publication No. 2015-230817 (JP 2015-230817 A) discloses a technique in which the state of charge (SOC) is calculated from a voltage and a current of a secondary battery, and a usable SOC range of the secondary battery is determined based on a measured potential of the cathode and a measured potential of the anode.

### SUMMARY OF THE INVENTION

Such a secondary battery degrades due to factors such as the temperature environment and usage history. However, depending on the mode of degradation, a difference may occur in the degree of degradation progression between the cathode and the anode. As a result, particularly when the degree of degradation progression becomes greater at the anode than at the cathode, the secondary battery may undergo rapid degradation.

The present disclosure has been made to address the above issue, and an object thereof is to provide a battery system that reduces or eliminates a difference in the degree of degradation progression between a cathode and an anode.

A battery system according to one aspect of the present disclosure includes: a battery including a cathode and an anode; a ripple current generator configured to supply ripple current to the battery; and a control device configured to control the ripple current generator. The control device is configured to supply the ripple current to the battery when a degradation amount of the anode of the battery is greater than or equal to a threshold.

With this configuration, by supplying ripple current and raising the temperature of the battery when the degradation amount of the anode is greater than or equal to the threshold, it is possible to increase the degradation amount of the cathode while suppressing degradation of the anode. As a result, rapid degradation of the secondary battery can be suppressed.

In one embodiment, the battery system further include a heating device configured to heat the battery. The control device is configured to heat the battery using the heating device in addition to supplying the ripple current when the degradation amount of the anode is greater than or equal to the threshold.

With this configuration, by using the heating device, the temperature of the battery can further be raised, making it possible to appropriately increase the degradation amount of the cathode.

In one embodiment, the control device is configured to generate the ripple current at a frequency at which the cathode reacts and the anode does not react.

With this configuration, by supplying ripple current having a frequency at which the cathode reacts and the anode does not react, it is possible to increase the degradation amount of the cathode while suppressing degradation of the anode.

The present disclosure can provide a battery system that reduces or eliminates a difference in the degree of degradation progression between the cathode and the anode.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram showing an example of the configuration of a vehicle equipped with a battery system according to an embodiment of the present disclosure;
FIG. 2 is a graph illustrating a mode of degradation of a battery;
FIG. 3 is a flowchart showing an example of processing executed by an electronic control unit (ECU);
FIG. 4 is a graph illustrating the frequency of ripple current;
FIG. 5A is a graph illustrating operation of the ECU in an embodiment; and
FIG. 5B is a graph illustrating operation of the ECU in the embodiment.

### DETAILED DESCRIPTION OF EMBODIMENTS

Hereinafter, an embodiment of the present disclosure will be described in detail with reference to the drawings. The same or corresponding portions are denoted by the same signs throughout the drawings, and description thereof will not be repeated.

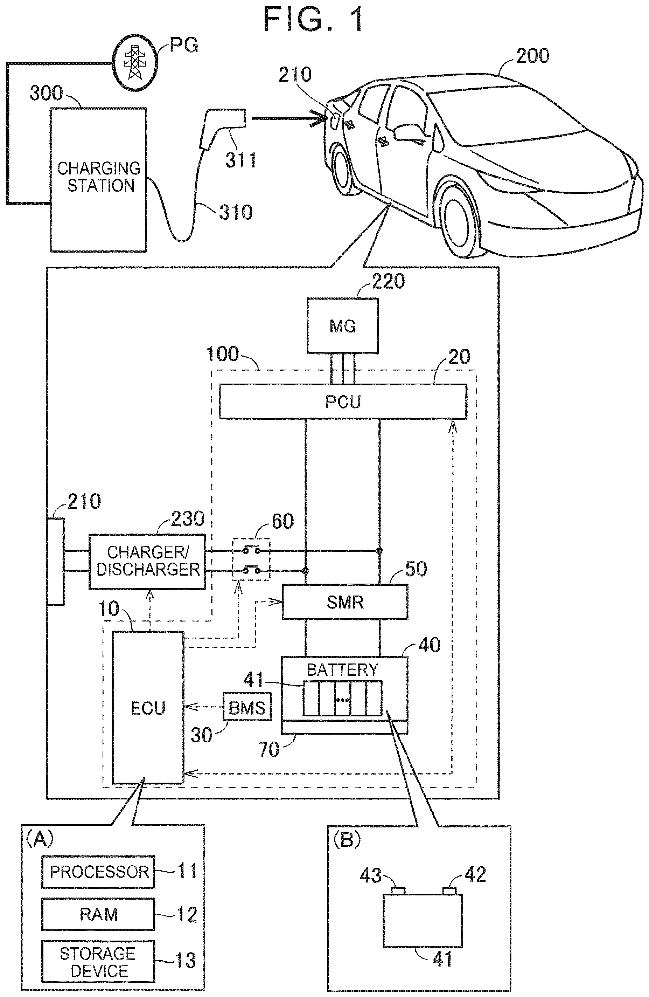

FIG. 1 shows an example of the configuration of a vehicle 200 equipped with a battery system 100 according to an embodiment of the present disclosure.

The vehicle 200 can transfer electric power to and from a charging station 300 (that is, perform charging and discharging) when electrically connected to the charging station 300 through a cable 310. Alternating current power is transferred between a connector 311 provided at an end of the cable 310 and the vehicle 200. The charging station 300 transfers electric power to and from a power grid PG.

The vehicle 200 is equipped with the battery system 100, an inlet 210, a motor generator (MG) 220, and a charger/discharger 230.

The vehicle 200 is configured to run on electric power stored in a battery 40 of the battery system 100. The vehicle 200 may be, for example, a battery electric vehicle (BEV) without an engine (internal combustion engine). However, the vehicle 200 is not limited to a BEV, and may be a plug-in hybrid electric vehicle (PHEV) equipped with an internal combustion engine, or another type of electrified vehicle (xEV).

The inlet 210 is provided on an exterior portion of the vehicle 200 and has a shape that can mate with the connector 311. The exterior portion includes a lid. When the inlet 210 is not in use, the lid is closed. The inlet 210 is thus covered by the lid, and exposure of the inlet 210 to the outside is suppressed.

The MG 220 is, for example, a three-phase alternating current rotating electrical machine. The MG 220 functions as a traction motor for the vehicle 200. The MG 220 is driven by alternating current power from the battery system 100 and rotates the drive wheels of the vehicle 200. The MG 220 also performs regenerative power generation and outputs the generated alternating current power to the battery system 100. The number of traction motors provided in the vehicle 200 is not particularly limited to one and may be two or more.

The charger/discharger 230 is connected to the inlet 210 and the battery system 100 (specifically, a relay 60). The charger/discharger 230 performs power conversion when electric power is transferred to and from the charging station 300. For example, the charger/discharger 230 converts alternating current power supplied from the charging station 300 into direct current power and supplies it to the battery system 100, or converts direct current power supplied from the battery system 100 into alternating current power and supplies it to the charging station 300. The charger/discharger 230 includes a power conversion circuit (for example, an inverter and a converter) and is configured to adjust the charging current or the discharging current.

The battery system 100 includes an electronic control unit (ECU) 10, a power control unit (PCU) 20, a battery management system (BMS) 30, the battery 40, a system main relay (SMR) 50, a relay 60, and a heating device 70.

As shown in part (A) of FIG. 1, the ECU 10 includes a processor 11, a random access memory (RAM) 12, and a storage device 13. The storage device 13 is configured to retain stored information. The storage device 13 stores programs and information to be used by the programs (for example, maps, formulas, and various parameters). In the present embodiment, the processor 11 executes the programs stored in the storage device 13, enabling the ECU 10 to perform various processes. These processes may be executed by hardware (electronic circuitry) without using software. The ECU 10 controls, for example, the operations of the charger/discharger 230, the PCU 20, the SMR 50, and the relay 60.

The battery 40 includes a plurality of cells 41. A predetermined number of cells 41 are arranged, for example, along the thickness direction of the cells 41. The predetermined number is not limited to any particular value. The cells 41 are secondary cells, and are typically lithium-ion secondary cells. Lithium-ion secondary cells are cells that use lithium as a charge carrier and may include not only lithium-ion secondary cells using a liquid electrolyte but also all-solid-state cells using a solid electrolyte.

As shown in part (B) of FIG. 1, each cell 41 is provided with a cathode terminal 42 connected to an electrode assembly inside the cell 41 and an anode terminal 43 connected to the electrode assembly inside the cell 41. The cathode terminal 42 of each cell 41 is connected to the anode terminal 43 of one of its adjacent cells 41 using a busbar or the like. The anode terminal 43 of each cell 41 is connected to the cathode terminal 42 of the other adjacent cell 41 using a busbar or the like. The cells 41 are connected in series in this manner.

The BMS 30 includes a voltage sensor that detects the voltage of the battery 40, a current sensor that detects the current of the battery 40, and a temperature sensor that detects the temperature of the battery 40. The BMS 30 monitors the state of the battery 40. The BMS 30 outputs, to the ECU 10, signals indicating detection results obtained using the various sensors.

The SMR 50 connects and disconnects a power line between the battery 40 and the PCU 20 in accordance with a control signal received from the ECU 10. The SMR 50 is in a closed state (connected state) when the vehicle 200 is traveling. The SMR 50 is also in a closed state when electric power is transferred between the battery 40 and the inlet 210 (and the charging station 300). The SMR 50 is also in a closed state when temperature raising control using ripple current, which will be described later, is performed.

The relay 60 is located between the charger/discharger 230 and the battery 40. The relay 60 connects and disconnects a power line (charge/discharge line) between the inlet 210 and the battery 40 in accordance with a control signal received from the ECU 10.

The heating device 70 is formed of, for example, a heater or the like. The heating device 70 operates in accordance with a control signal received from the ECU 10 and heats the battery 40. The heating device 70 may be configured to raise the temperature of the battery 40 using, for example, a liquid medium.

In the present embodiment, the charge/discharge line that passes through the inlet 210, the charger/discharger 230, and the relay 60 is connected to a power line connecting the SMR 50 and the PCU 20. That is, the charge/discharge line is connected such that the charger/discharger 230 is connected in parallel with the PCU 20 with respect to the SMR 50. However, the present disclosure is not limited to this. The charge/discharge line may be connected to a power line connecting the battery 40 and the SMR 50. That is, the charge/discharge line may be connected such that the charger/discharger 230 is connected in parallel with the SMR 50 with respect to the battery 40.

When the vehicle 200 is in a plugged-in state, external charging (i.e., charging of the battery 40 with electric power from the charging station 300) and external discharging (i.e., discharging of electric power from the battery 40 to the charging station 300) can be performed. The vehicle 200 may alternatively be configured to perform external charging alone. When external charging or external discharging is performed, the relay 60 is controlled to a closed state (connected state). When neither external charging nor external discharging is performed, the relay 60 is controlled to an open state (disconnected state).

The PCU 20 includes a circuit (for example, an inverter and a converter) that drives the MG 220 using electric power supplied from the battery 40. The inverter and the converter are configured by, for example, combining a plurality of switching elements. The inverter and the converter perform switching operations for converting electric power, switching operations for boosting voltage, or switching operations for generating ripple current described later, in accordance with control signals received from the ECU 10.

For example, when the temperature of the battery 40 is to be raised, the ECU 10 controls the PCU 20 to generate ripple current. Ripple current is a current having a highfrequency component superimposed on a charge/discharge current of the battery. The ECU 10 causes the generated ripple current to flow through each of the cells 41 constituting the battery 40, and raises the temperature of each of the cells 41 using Joule heat generated by the ripple current. The ripple current is generated by switching control executed on switching elements provided in the PCU 20 (for example, an inverter) in accordance with a control signal received from the ECU 10. The ECU 10 may adjust the frequency of the ripple current by, for example, adjusting the on/off cycle of the switching elements. When the cells 41 are, for example, lithium-ion cells, the ECU 10 sets the frequency and amplitude of the ripple current such that lithium does not precipitate. A known technique may be used for generating ripple current, and detailed description thereof will be omitted. In the present embodiment, ripple current is described as being generated in the PCU 20. However, it may alternatively be generated in, for example, the charger/discharger 230. In the present embodiment, the PCU 20 corresponds to the "ripple current generator."

In the vehicle 200 having the above configuration, the battery 40 degrades due to factors such as the temperature environment and usage conditions. However, as a mode of degradation, a difference may occur in the degree of degradation progression between the cathode and the anode.

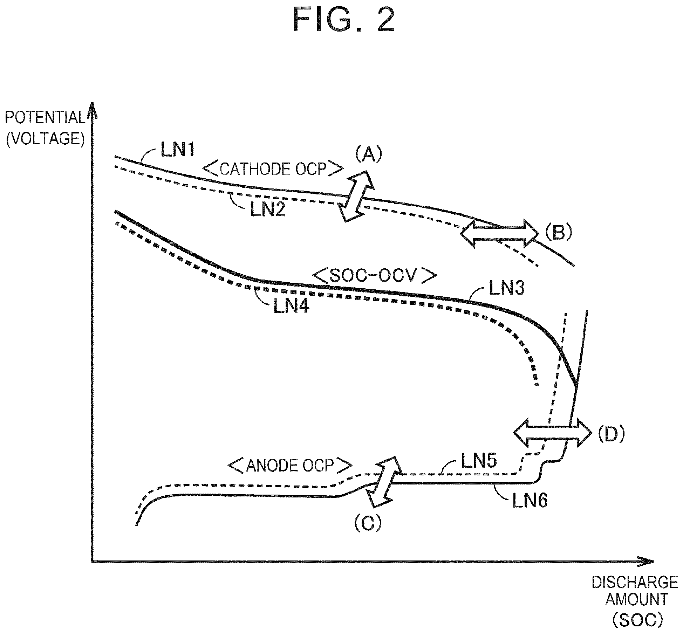

FIG. 2 is a graph illustrating a mode of degradation of the battery 40. The vertical axis in FIG. 2 indicates potential. The horizontal axis in FIG. 2 indicates discharged amount. LN1 (thin solid line) in FIG. 2 indicates a change in open circuit potential (OCP) of the cathode with respect to a change in discharged amount in an initial state. In FIG. 2, the discharged amount increases toward the right side of the graph. LN2 (thin dashed line) in FIG. 2 indicates a change in OCP of the cathode with respect to a change in discharged amount after degradation. LN3 (thick continuous line) in FIG. 2 indicates a change in open circuit voltage (OCV) with respect to a change in SOC in the initial state. In FIG. 2, the SOC decreases toward the right side of the graph. LN4 (thick dashed line) in FIG. 2 indicates a change in OCV with respect to a change in SOC after degradation. LN5 (thin continuous line) in FIG. 2 indicates a change in OCP of the anode with respect to a change in discharged amount in the initial state. LN6 (thin dashed line) in FIG. 2 indicates a change in OCP of the anode with respect to a change in discharged amount after degradation.

As shown by LN1 and LN2 in FIG. 2, the OCP line of the cathode shifts in the directions of the arrows in part (A) and part (B) of FIG. 2 as degradation progresses from the initial state. FIG. 2 shows an example in which the OCP line shifts downward in the graph due to degradation of the battery 40.

Similarly, as shown by LN5 and LN6 in FIG. 2, the OCP line of the anode shifts in the directions of the arrows in part (C) and part (D) of FIG. 2 as degradation progresses from the initial state. FIG. 2 shows an example in which the OCP line shifts upward in the graph due to degradation of the battery 40.

Due to the occurrence of such shifts in the cathode OCP and the anode OCP, a shift also occurs in the OCV with respect to changes in SOC as the battery 40 degrades, as shown by LN3 and LN4 in FIG. 2.

Such degradation progresses in both the cathode and the anode, but a difference may occur in the degree of degradation progression between the cathode and the anode. In particular, when, as a mode of degradation, the degradation amount of the anode becomes significantly greater than that of the cathode, the battery 40 may undergo rapid degradation.

Accordingly, in the present embodiment, the ECU 10 controls the PCU 20 to supply ripple current to the battery 40 when the degradation amount of the anode of the battery 40 becomes greater than or equal to a threshold.

With this configuration, when the degradation amount of the anode becomes greater than or equal to the threshold, ripple current is supplied to raise the temperature of the battery 40, thereby suppressing an increase in the degradation amount of the anode while increasing the degradation amount of the cathode. As a result, a difference between the degradation amounts of the anode and the cathode can be reduced or eliminated, and rapid degradation of the battery 40 can be suppressed.

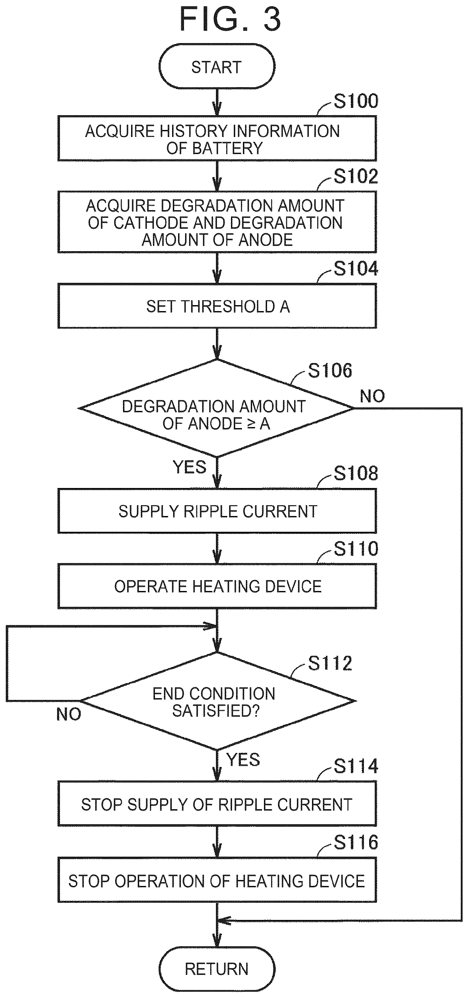

An example of processing executed by the ECU 10 will now be described with reference to FIG. 3. FIG. 3 is a flowchart showing an example of the processing executed by the ECU 10.

In step (hereinafter, "step" will be abbreviated as "S") 100, the ECU 10 acquires history information of the battery 40. For example, the ECU 10 acquires, as the history information of the battery 40, information on a history of current of the battery 40, a history of voltage of the battery 40, and a history of temperature of the battery 40 obtained from the BMS 30. The process then proceeds to S102.

In S102, the ECU 10 acquires a degradation amount of the cathode and a degradation amount of the anode of the battery 40. For example, the ECU 10 acquires the degradation amount of the cathode and the degradation amount of the anode of the battery 40 using the acquired history information of the battery 40. The ECU 10 may estimate, for example, a slope and an intercept on the assumption that the degradation amount of the cathode and the degradation amount of the anode change linearly (as a linear function) with respect to elapsed days, a square root of elapsed days, or the like, and acquire a current degradation amount of the cathode and a current degradation amount of the anode. The process then proceeds to S104.

In S104, the ECU 10 sets a threshold A for the degradation amount of the anode. The ECU 10 sets the threshold A corresponding to the current degradation amount of the anode. For example, the ECU 10 may set, as the threshold A, a value obtained by adding a predetermined value to an assumed value of the current degradation amount of the anode. Alternatively, a map indicating the relationship between elapsed days, a square root of elapsed days, or the like and the threshold A may be stored in advance in a memory or the like, and the threshold A may be set based on the current elapsed days, the square root of elapsed days, or the like. The process then proceeds to S106.

In S106, the ECU 10 determines whether the acquired degradation amount of the anode is greater than or equal to the threshold A. Since the threshold A is as described above, detailed description thereof will not be repeated. When it is determined that the degradation amount of the anode is greater than or equal to the threshold A (YES in S106), the process proceeds to S108.

In S108, the ECU 10 executes temperature raising control using ripple current. Since the temperature raising control using ripple current is as described above, detailed description thereof will not be repeated. The ECU 10 adjusts the frequency of the generated ripple current such that the ripple current has a predetermined amplitude at a frequency within a frequency band in which a reaction due to ripple current is promoted at the cathode and no reaction due to ripple current occurs at the anode.

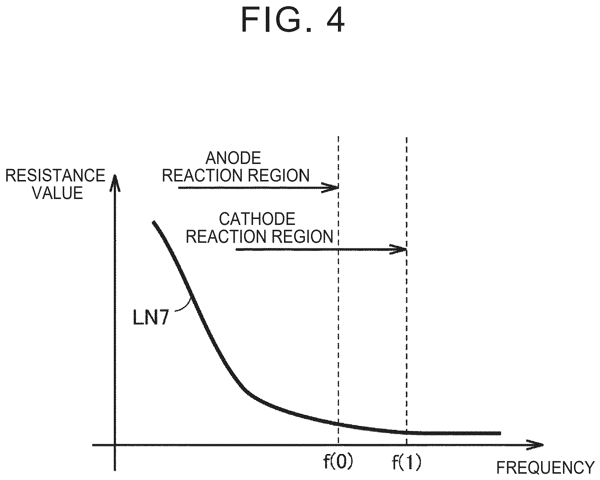

FIG. 4 is a graph illustrating the frequency of ripple current. The vertical axis in FIG. 4 indicates a resistance value based on alternating current impedance. The horizontal axis in FIG. 4 indicates frequency. LN7 in FIG. 4 indicates a change in the resistance value with respect to a change in frequency.

As shown in FIG. 4, the resistance value based on alternating current impedance changes such that it decreases as the frequency increases. In this case, at the anode, a region in which a reaction due to ripple current occurs (hereinafter referred to as "anode reaction region") exists in a frequency band having frequency f(0) as an upper limit. On the other hand, at the cathode, a region in which a reaction due to ripple current (that is, generation of Joule heat) occurs (hereinafter referred to as "cathode reaction region") exists in a frequency band having frequency f(1) (> f(0)) as an upper limit. Accordingly, the ECU 10 controls the PCU 20 such that ripple current having a frequency within a frequency band between frequency f(0) and frequency f(1) is generated. For example, the ECU 10 also supplies ripple current to the battery 40 such that the amount of heat generated in the battery 40 becomes a predetermined amount. The process then proceeds to S110.

In S110, the ECU 10 operates the heating device 70. For example, the ECU 10 may continuously operate the heating device 70, may repeatedly operate and stop the heating device 70 at predetermined time intervals, or may operate the heating device 70 such that the temperature of the battery 40 is maintained at a target value. The process then proceeds to S112.

In S112, the ECU 10 determines whether an end condition is satisfied. The end condition is a condition for stopping supply of ripple current and stopping operation of the heating device 70, and includes, for example, at least one of the following conditions: a condition that a predetermined time has elapsed since supply of ripple current was started; a condition that the temperature of the battery 40 exceeds a threshold; and a condition that the amount of heat generated exceeds a threshold. When it is determined that the end condition is satisfied (YES in S112), the process proceeds to S114.

In S114, the ECU 10 stops supply of ripple current. The process then proceeds to S116.

In S116, the ECU 10 stops operation of the heating device 70. The process then ends. When the degradation amount of the anode is less than the threshold A (NO in S106), the process ends. When it is determined that the end condition is not satisfied (NO in S112), the process returns to S112.

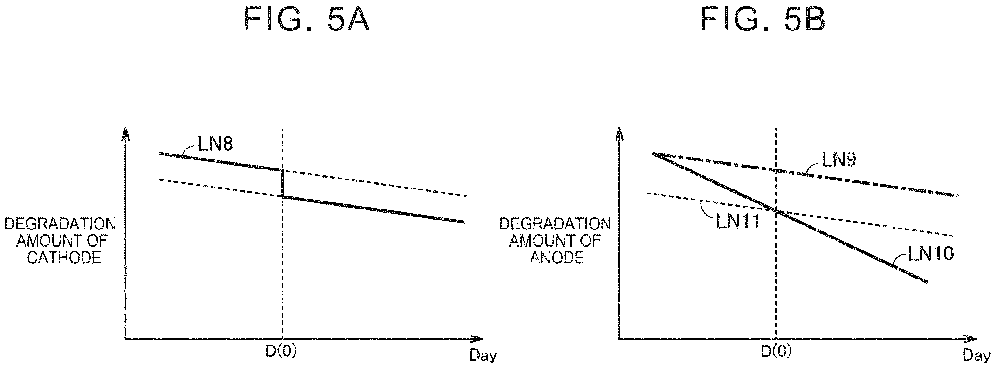

Operation of the ECU 10 based on the above-described structure and flowchart will be described below with reference to FIGS. 5A and 5B. FIGS. 5A and 5B are graphs illustrating the operation of the ECU 10 in the present embodiment.

The vertical axis in FIG. 5A indicates the degradation amount of the cathode, and the downward direction corresponds to an increase in the degradation amount of the cathode. The horizontal axis in FIG. 5A indicates elapsed days. LN8 in FIG. 5A indicates a change in the degradation amount of the cathode with respect to a change in days.

The vertical axis in FIG. 5B indicates the degradation amount of the anode, and the downward direction corresponds to an increase in the degradation amount of the anode. The horizontal axis in FIG. 5B indicates elapsed days. LN9 in FIG. 5B indicates a change in an assumed value of the degradation amount of the anode with respect to a change in days. LN10 in FIG. 5B indicates a change in an estimated value of the degradation amount of the anode with respect to a change in days. LN11 in FIG. 5B indicates a change in the threshold A of the degradation amount of the anode with respect to a change in days.

When history information of the battery 40 mounted in the vehicle 200 is acquired (S100), the degradation amount of the cathode and the degradation amount of the anode of the battery 40 are acquired using the acquired history information of the battery 40 (S102), and the threshold A of the degradation amount of the anode is acquired (S104).

When, at day D(0), it is determined that the acquired degradation amount of the anode is greater than or equal to the threshold A, temperature raising control using ripple current is executed (S108), and the heating device 70 is operated (S110). Due to supply of ripple current and operation of the heating device 70, degradation at the anode of the battery 40 is suppressed, while the temperature of the battery 40 is raised due to a reaction caused by ripple current at the cathode. As a result, degradation of the cathode is promoted. Accordingly, as shown by LN8 in FIG. 5A, the degradation amount of the cathode increases at day D(0). In this manner, by increasing the degradation amount of the cathode, a difference from the degradation amount of the anode can be reduced or eliminated. When the end condition is satisfied (YES in S112), supply of ripple current is stopped (S114), and operation of the heating device 70 is stopped (S116).

As described above, in the battery system 100 of the present embodiment, when the degradation amount of the anode is greater than or equal to the threshold A, ripple current is supplied, thereby raising the temperature of the battery 40 and increasing the degradation amount of the cathode. Rapid degradation of the battery 40 can thus be suppressed. Accordingly, it is possible to provide a battery system that reduces or eliminates a difference in the degree of degradation progression between the cathode and the anode.

When the degradation amount of the anode is greater than or equal to the threshold A, ripple current is supplied, and the heating device 70 is also controlled to raise the temperature of the battery 40. Accordingly, the temperature of the battery 40 can further be raised. As a result, the degradation amount of the cathode can be increased appropriately.

Since the ECU 10 controls the PCU 20 to generate ripple current having a frequency within a frequency band in which a reaction occurs (Joule heat is generated) at the cathode and no reaction occurs (Joule heat is not generated) at the anode, degradation of the cathode can be promoted while suppressing degradation of the anode.

Next, modifications will be described.
The above embodiment illustrates an example in which the ECU 10 supplies ripple current and operates the heating device 70 when the degradation amount of the anode is greater than or equal to the threshold A. However, for example, the ECU 10 may supply ripple current when the degradation amount of the anode is greater than or equal to the threshold A and the degradation amount of the cathode is less than or equal to a threshold B. Alternatively, for example, when the degradation amount of the anode is greater than or equal to a threshold C (< A), the ECU 10 may execute either supplying ripple current or operating the heating device 70, and when the degradation amount of the anode is greater than or equal to the threshold A, the ECU 10 may execute both supplying ripple current and operating the heating device 70. Alternatively, when the degradation amount of the anode is greater than or equal to the threshold A, the ECU 10 may execute supplying ripple current alone.

In the above embodiment, the ECU 10 has been described as estimating the degradation amount of the anode. However, for example, the ECU 10 may acquire the degradation amount of the anode of the battery 40 from an external server. For example, the ECU 10 may transmit history information of the battery 40 to the external server each time a predetermined time elapses. The external server may estimate the degradation amount of the cathode and the degradation amount of the anode using the received history information of the battery 40, and may transmit the estimated degradation amounts of the cathode and the anode to the vehicle 200.

In the above embodiment, the ECU 10 has been described as supplying ripple current when the degradation amount of the anode is greater than or equal to the threshold A. However, for example, when the anode potential becomes greater than or equal to a threshold, the ECU 10 may determine that the degradation amount of the anode is greater than or equal to the threshold A and supply ripple current.

All or part of the modifications described above may be combined as appropriate.
The embodiment disclosed herein should be considered to be illustrative in all respects and not restrictive. The scope of the present invention is set forth in the claims rather than in the above description, and is intended to include all modifications within the meaning and scope equivalent to those of the claims.

## Claims

1. A battery system comprising:
a battery including a cathode and an anode;
a ripple current generator configured to supply ripple current to the battery; and
a control device configured to control the ripple current generator,
wherein the control device is configured to supply the ripple current to the battery when a degradation amount of the anode of the battery is greater than or equal to a threshold.

2. The battery system according to claim 1, further comprising a heating device configured to heat the battery,
wherein the control device is configured to heat the battery using the heating device in addition to supplying the ripple current when the degradation amount of the anode is greater than or equal to the threshold.

3. The battery system according to claim 1, wherein the control device is configured to generate the ripple current at a frequency at which the cathode reacts and the anode does not react.
